# FASCICULE DE BREVET EUROPEEN

(11) **EP 0 597 768 B1**
(45) Date de publication et mention de la délivrance du brevet: **11.06.1997**
(21) Numéro de dépôt: 93402740.0
(22) Date de dépôt: 09.11.1993
(51) Int. Cl.: B60K 15/07

(54) **Système de sécurité pour véhicule routier fonctionnant au combustible gazeux**
Sicherheitssystem für ein mit gasförmigem Brennstoff arbeitendes Strassenfahrzeug
Security system for a road vehicle working with gaseous fuel

(30) Priorité: 13.11.1992 FR 9213665
(43) Date de publication de la demande: 18.05.1994
(73) Titulaire: RENAULT VEHICULES INDUSTRIELS Société Anonyme dite:, F-69003 Lyon (FR)
(72) Inventeur: Cros, Michel, F-69300 Caluire (FR)
(74) Mandataire: Ernst-Schonberg, Michel

(56) Documents cités:
- DE-A- 3 130 472
- FR-A- 2 225 004
- GB-A- 123 777
- US-A- 4 523 548
- INTERNATIONAL JOURNAL OF HYDROGEN ENERGY vol. 7, no. 8 , 1982 , NORWICH, GREAT BRITAIN pages 661 - 669 W. PESCHKA 'OPERATING CHARACTERISTICS OF A LH2-FUELLED AUTOMOTIVE VEHICLE AND A SEMI-AUTOMATIC LH2-REFUELLING STATION'

## Description

La présente invention se rapporte à un système de sécurité pour un véhicule routier équipé d'un moteur à combustion interne alimenté par un combustible gazeux. L'invention concerne plus particulièrement un système de sécurité permettant une évacuation maîtrisée du combustible en cas de fuite accidentelle de ce dernier notamment grâce à une limitation du débit et du volume des gaz libérés et par une orientation systématique vers le dessus du véhicule de tout dégagement de gaz facilitant leur dilution dans l'atmosphère.

L'utilisation de combustibles gazeux sous pression facilement détonant au contact de l'air, tel que du méthane ou du gaz naturel, pour faire fonctionner des véhicules routiers et notamment des véhicules de transport routier, impose certaines mesures de sécurité pour minimiser ou éviter les risques d'explosion. Les moyens aujourd'hui mis en oeuvre, ont principalement trait à la qualification technique des composants du circuit des gaz et à la limitation des conséquences d'une éventuelle fuite par une ventilation de l'ensemble des parties du circuit de gaz présentes à l'intérieur du véhicule.

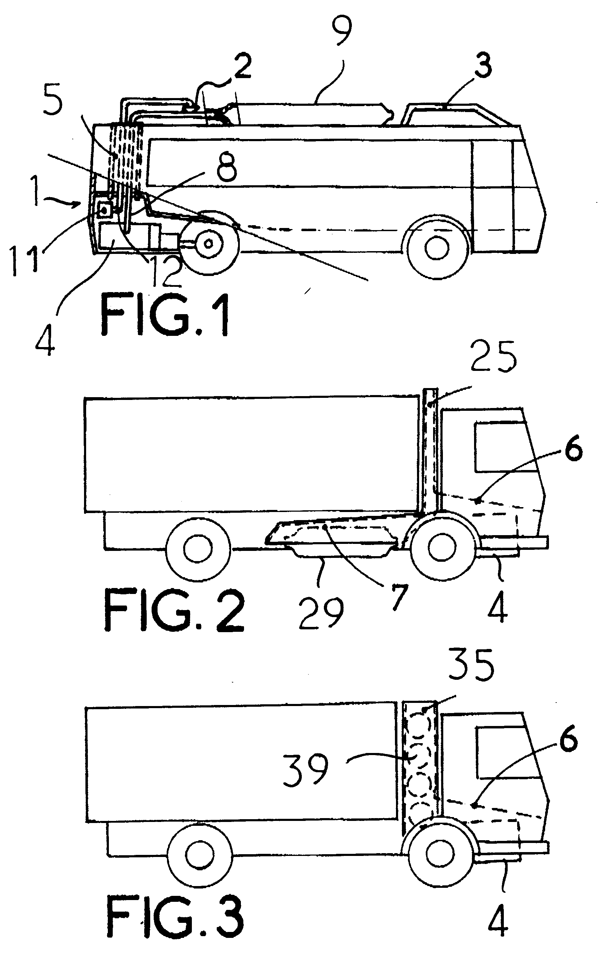

On connaît par le document US-A-4.523.548 un système de stockage de gaz combustible pour véhicule routier équipé d'un moteur à combustion interne alimenté en gaz combustible sous pression, du type comportant des réservoirs de stockage du gaz sous pression connectés respectivement à des moyens de remplissage et à des moyens d'amenée du gaz audit moteur, dans lequel les moyens de remplissage comportent une tubulure débouchant sur une paroi latérale du véhicule (fig. 1) par un orifice muni d'une vanne de raccordement et en ce que lesdits moyens de remplissage sont équipés de moyens de déconnexion aptes à isoler lesdits réservoirs desdits moyens de remplissage, lesdits moyens de déconnexion étant formés par une vanne adaptée disposée directement en aval de la vanne de raccordement

Une telle approche ne prend toutefois pas en compte la limitation des quantités de gaz pouvant s'échapper ni leur dilution dans l'atmosphère, il existe donc aujourd'hui, en cas de défaillance du circuit d'alimentation sous pression un risque de formation de nappes inflammables au voisinage immédiat des véhicules routiers utilisant un combustible gazeux.

Par ailleurs, les ensembles de stockage et de remplissage sur les véhicules en exploitation ne présentent pas de dispositions particulières de protection ou de sécurité en cas de collision.

Le système de sécurité selon l'invention permet de pallier à ces inconvénients. Il comporte en effet selon une caractéristique de l'invention, des moyens de remplissage avec raccord et vanne, situé en paroi latérale du véhicule de façon à faciliter les opérations de remplissage, ces moyens de remplissage étant automatiquement isolés du circuit de gaz sous pression dès la fin des opérations de remplissage, grâce à des moyens de déconnexion adaptés.

Les réservoirs et le circuit d'alimentation des gaz sous pression quant à eux, sont positionnés de façon à être les plus protégés possible en cas de collision.

Une autre caractéristique du système de sécurité consiste en ce que les différents réservoirs utilisés pour le stockage des gaz soient répartis en plusieurs circuits indépendants d'amenée du gaz au moteur, chaque circuit pouvant être isolé afin d'éviter la purge intempestive de toute la réserve de gaz stockée.

De plus, chacun des réservoirs est muni au droit de ses ouvertures d'entrée et de sortie des gaz d'un ajutage intégré de section déterminée, fonction notamment de la capacité du réservoir, de la pression nominale de service et d'une durée prédéfinie, de façon à contrôler toute vidange accidentelle du réservoir et à éviter ainsi la formation d'une nappe inflammable.

Selon une autre caractéristique de l'invention, un ou plusieurs conduits d'évent étanches s'étendent du compartiment moteur jusqu'au dessus du véhicule de façon à permettre l'évacuation de tous les gaz combustibles s'échappant du moteur et ainsi éviter une accumulation explosive de ces derniers. Ce ou ces conduits d'évent peuvent être utilisés par ailleurs pour le passage de tout ou partie des conduites amenant le gaz des réservoirs au moteur.

Selon une autre caractéristique de l'invention, dans le cas d'un véhicule avec stockage du gaz comburant en toiture, on prévoit des arceaux fixés au toit, indépendamment et en avant des réservoirs, dans une direction longitudinale. Ces arceaux permettent d'absorber par déformation progressive l'énergie d'une collision contre un obstacle au niveau des réservoirs et de protéger ces derniers.

On comprendra mieux les buts, aspects et avantages de la présente invention, d'après la description donnée ci-après de différents modes de réalisation de l'invention, présentés à titre d'exemples non limitatifs, en se référant au dessin annexé, dans lequel :
- la figure 1 représente en coupe partielle un exemple d'application du système de sécurité selon l'invention à un véhicule pour le transport de personne ;
- les figures 2 et 3 représentent en coupe partielle deux variantes du système de sécurité selon l'invention appliquées à un véhicule de transport de marchandises.

Les différentes figures décrivent différents types de véhicules routiers propulsés par des moteurs à combustion interne alimentés par un combustible gazeux sous pression, tel que du méthane ou du gaz naturel. Pour faciliter la compréhension des figures, les mêmes références renvoient aux mêmes organes.

Conformément à la figure 1, le circuit du combustible gazeux comprend tout d'abord des moyens de remplissage 1 des réservoirs de stockage 9 du véhicule. Ces moyens de remplissage comprennent une tubulure 12 munie d'un orifice amont équipé d'une vanne de raccordement 11 débouchant sur une paroi latérale du véhicule de façon parfaitement ergonomique pour rendre la manoeuvre de remplissage à la pompe aisée par le conducteur du véhicule ou tout autre personne préposée à cette opération. Cette tubulure 12 débouche à son extrémité aval dans les réservoirs de stockage 9. La tubulure 12 est munie d'une vanne 2 de déconnexion disposée au voisinage de son extrémité aval et permettant d'isoler automatiquement les réservoirs 9 de la tubulure de remplissage dès que les opérations de remplissage sont terminées. Pour ce faire on peut par exemple utiliser un clapet anti-retour, ou encore utiliser une vanne pilotée asservie à l'ouverture de la vanne de raccordement 11, ou bien encore une vanne actionnée directement par le conducteur du véhicule. Ainsi un choc ou une collision au droit de l'orifice de remplissage 11 n'affecte nullement le circuit de gaz sous pression.

Les réservoirs de stockage 9 et le circuit de gaz sous pression reliant ces derniers au moteur 4 sont agencés dans le véhicule de façon à être le moins exposés possibles à une collision. Ainsi dans le cas du véhicule de transport de personnes de la figure 1, les réservoirs 9 sont disposés sur le toit, des arceaux de sécurité 3 déformables sont alors disposés longitudinalement sur le toit du véhicule, en avant des réservoirs 9, de façon à absorber l'énergie d'une collision contre un obstacle au niveau des réservoirs 9, branches etc..., et ainsi protéger ces derniers. Dans le cas des véhicules de transport des figures 2 et 3, ces réservoirs, respectivement 29 et 39, peuvent être disposés sous le plancher du véhicule ou encore derrière la cabine de pilotage.

Les différents réservoirs utilisés pour stocker le combustible gazeux sont reliés au moteur correspondant par une pluralité de conduites d'alimentation indépendantes 8 munies de vannes pilotées permettant l'obturation sélective des conduites, ces vanne étant par exemple commandées depuis le poste de pilotage du véhicule. On peut ainsi utiliser une conduite d'alimentation distincte par réservoir de stockage. Cet agencement permet d'éviter une purge de l'ensemble des réservoirs lorsque l'une des conduites est affectée par une fuite de gaz.

De plus chacun des réservoirs de stockage du combustible gazeux est muni au droit de ses ouvertures d'entrée et de sortie des gaz d'un ajutage intégré de section prédéterminée, fonction du volume du réservoir concerné, de la pression nominale de service et de la durée souhaitée de la purge du réservoir, de façon à contrôler le temps de vidange accidentelle des gaz contenus par le réservoir à l'atmosphère à la suite d'une fuite ou d'une rupture d'une canalisation desservant le réservoir : tubulure de remplissage ou conduite d'alimentation reliant le réservoir au moteur. On peut ainsi choisir les ajutages pour opérer la purge du réservoir en plus d'une demi-heure de façon à diluer parfaitement les gaz dans l'atmosphère et éviter ainsi la formation d'une nappe inflammable.

Par ailleurs, le compartiment du moteur 4 est mis en communication avec le dessus du véhicule au moyen d'un ou plusieurs conduits d'évent étanches permettant le passage des gaz combustibles éventuellement échappés ainsi qu'éventuellement le passage des conduites de gaz sous pression reliant les réservoirs au moteur. Dans le cas du véhicule de transport de personnes, autobus ou autocar, représenté à la figure 1 ce conduit d'évent 5 peut traverser l'habitacle des passagers. Sur les véhicules de transport de marchandises, représentés aux figures 2 et 3, ces conduits d'évents, respectivement 25 et 35, sont disposés verticalement entre la cabine ; ils assurent la ventilation du compartiment moteur 6, ce dernier étant avantageusement équipé d'un plafond et de côtés latéraux étanches forçant les gaz vers les conduites d'évent. Ainsi étanché, le compartiment moteur évacue naturellement les gaz grâce aux conduites d'évent à l'atmosphère favorisant leur dilution. En vue de favoriser une aspiration continue du compartiment moteur par les conduits d'évent il est possible de prévoir le raccordement à la bouche d'aspiration du circuit d'alimentation en air du moteur. Une autre possibilité consiste à raccorder la ligne d'échappement des gaz brûlés sur les conduits d'évent et à profiter ainsi l'effet de trompe des gaz d'échappement pour activer l'ascension et la dilution sans oxygène du combustible gazeux.

Le ou les conduits d'évent peuvent également servir à ventiler les réservoirs de stockage. Ainsi dans l'exemple de réalisation donné à la figure 2, les réservoirs 29 disposés sous le plancher du camion sont recouverts par une hotte 7 correspondante qui est raccordée au conduit d'évent 25. Dans le cas particulier du véhicule routier représenté à la figure 3, les réservoirs 39 sont directement montés dans le fourreau vertical 35 faisant office de conduit d'évent.

Bien entendu, l'invention n'est nullement limitée au mode de réalisation décrit et illustré qui n'a été donné qu'à titre d'exemple.

## Revendications

1. Système de sécurité pour véhicule routier équipé d'un moteur à combustion interne (4) alimenté en gaz combustible sous pression, du type comportant au moins un réservoir de stockage du gaz sous pression (9,29,39) connecté à deux tubulures distinctes, une première tubulure de remplissage (12) et à une seconde tubulure d'amenée (8) du gaz audit moteur, ladite tubulure de remplissage (12) débouchant à son extrémité amont sur une paroi latérale du véhicule par un orifice muni d'une vanne de raccordement (11) et comportant des moyens de déconnexion aptes à isoler ledit réservoir (9,29,39) de ladite tubulure de remplissage (12), caractérisé en ce que lesdits moyens de déconnexion sont formés par une vanne de déconnexion (2) disposée à l'extrémité aval de ladite tubulure de remplissage (12) s'étendant à l'opposé de l'extrémité amont et donc le plus loin possible de la vanne de raccordement (10) de sorte que la destruction de cette dernière lors d'un choc n'implique pas la destruction de ladite vanne de déconnexion (2).

2. Système de sécurité selon la revendication 1, caractérisé en ce que chaque réservoir de gaz comprimé (9,29,39) comporte au droit de ses ouvertures d'entrée et de sortie des gaz un ajutage intégré apte à limiter le débit de fuite des gaz en cas de rupture d'une canalisation.

3. Système de sécurité selon la revendication 2, caractérisé en ce que ledit ajutage est dimensionné en rapport à la fois avec le volume du réservoir (9,29,39) concerné, avec la pression nominale de service quand le réservoir est plein et avec une durée prédéterminée de purge du réservoir, de façon que les gaz fuyant à l'atmosphère à travers l'ouverture correspondante puissent se diluer parfaitement.

4. Système de sécurité selon l'une quelconque des revendications 1 à 3, caractérisé en ce que l'ensemble des réservoirs (9,29,39) est connecté au moteur (4) par une pluralité de conduites d'alimentation (8) indépendantes les unes des autres, chacune de ces conduites étant munie de moyens d'obturation pilotés.

5. Système de sécurité selon l'une quelconque des revendications 1 à 4, caractérisé en ce que le compartiment (6) où est disposé le moteur (4) est étanché et est muni d'au moins un conduit d'évent (5,25,35) sensiblement vertical débouchant au dessus du véhicule.

6. Système de sécurité selon la revendication 5, caractérisé en ce que les conduites d'alimentation (8) reliant lesdits réservoirs (9,29,39) au moteur (4) sont disposées pour tout ou partie à l'intérieur dudit conduit d'évent (5,25,35).

7. Système de sécurité selon l'une quelconque des revendications 5 à 6, caractérisé en ce qu'une hotte d'aspiration (7) est agencée au dessus des réservoirs (29), ladite hotte étant reliée audit conduit d'évent (25).

8. Système de sécurité selon l'une quelconque des revendications 5 à 6, caractérisé en ce que lesdits réservoirs (39) sont disposés à l'intérieur dudit conduit d'évent (35).

9. Système de sécurité selon l'une quelconque des revendications 5 à 8, caractérisé en ce que l'air comburant du moteur (4) est prélevé dans le conduit d'évent (5,25,35).

10. Système de sécurité selon l'une quelconque des revendications 5 à 8, caractérisé en ce que la ligne d'échappement du moteur (4) débouche dans le conduit d'évent (5,25,35).

11. Système de sécurité selon l'une quelconque des revendications précédentes, caractérisé en ce que les réservoirs de stockage (9) sont disposés sur le toit du véhicule routier et en ce que des moyens de sécurité (3) sont agencés en avant desdits réservoirs.

## Claims

1. A safety system for a road vehicle equipped with an internal combustion engine (4) supplied by pressurised fuel gas, of the type comprising at least one pressurised gas storage tank (9, 29, 39) connected to two separate tubes, a first filling tube (12) and a second tube (8) for supplying the gas to the engine, the filling tube (12) opening out at its upstream end on a lateral wall of the vehicle via an opening provided with a connection valve (11) and comprising cut-off means adapted to isolate this tank (9, 29, 39) from the filling tube (12), characterised in that the cut-off means are formed by a cut-off valve (2) disposed at the downstream end of the filling tube (12) extending opposite to the upstream end and therefore as far as possible from the connection valve (10) so that the destruction of the latter during an impact does not entail the destruction of the cut-off valve (2).

2. A safety system as claimed in claim 1, characterised in that each pressurised gas tank (9, 29, 39) comprises, perpendicular to its gas inlet and outlet openings, an integrated nozzle adapted to limit the rate of leakage of the gases in the event of a fracture of a tube.

3. A safety system as claimed in claim 2, characterised in that this nozzle is dimensioned both with respect to the volume of the tank (9, 29, 39) in question, the nominal operating pressure when the tank is full and a predetermined drainage time of the tank so that the gases escaping into the atmosphere through the corresponding opening can be fully diluted.

4. A safety system as claimed in any one of claims 1 to 3, characterised in that all the tanks (9, 29, 39) are connected to the engine (4) by a plurality of supply ducts (8) independent from one another, each of these ducts being provided with driven closure means.

5. A safety system as claimed in any one of claims 1 to 4, characterised in that the compartment (6) in which the engine (4) is disposed is led-tight and is provided with at least one substantially vertical vent duct (5, 25, 35) opening out at the top of the vehicle.

6. A safety system as claimed in claim 5, characterised in that the supply ducts (8) connecting these tanks (9, 29, 39) to the engine (4) are disposed entirely or partially within the vent duct (5, 25, 35).

7. A safety system as claimed in any one of claims 5 and 6, characterised in that a suction hood (7) is disposed above the tanks (29), this hood being connected to the vent duct (25).

8. A safety system as claimed in any one of claims 5 and 6, characterised in that the tanks (39) are disposed inside the vent duct (35).

9. A safety system as claimed in any one of claims 5 to 8, characterised in that the fuel air of the engine (4) is taken from the vent duct (5, 25, 35).

10. A safety system as claimed in any one of claims 5 to 8, characterised in that the exhaust line from the engine (4) communicates with the vent duct (5, 25, 35).

11. A safety system as claimed in any one of the preceding claims, characterised in that the storage tanks (9) are disposed on the roof of the road vehicle and in that safety means (3) are disposed in front of these tanks.

## Patentansprüche

1. Sicherheitssystem für ein Straßenfahrzeug, das mit einem Verbrennungsmotor (4) ausgestattet ist, der mit unter Druck stehendem Brenngas versorgt wird, des Typs, der mindestens einen Behälter (9, 29, 39) zur Bevorratung des unter Druck stehenden Gases aufweist, der mit zwei verschiedenen Stutzen verbunden ist, einem ersten Füllungsstutzen (12) und einem zweiten Stutzen (8) zur Zuführung des Gases zum Motor, wobei der Füllungsstutzen (12) an seinem stromaufwärtigen Ende in eine Seitenwand des Fahrzeugs durch eine Öffnung mündet, die mit einem Anschlußventil (11) versehen ist und Abschaltungsmittel aufweist, die geeignet sind, den Behälter (9, 29, 39) vom Füllungsstutzen (12) zu isolieren,
dadurch gekennzeichnet, daß die Abschaltungsmittel durch ein Abschaltungsventil (2) gebildet sind, das am stromabwärtigen Ende des Füllungsstutzens (12) angeordnet ist, der sich entgegengesetzt zum stromaufwärtigen Ende und folglich so weit wie möglich von dem Anschlußventil (10) derart erstreckt, daß die Zerstörung des letztgenannten bei einem Aufprall keine Zerstörung des Abschaltungsventils (2) nachsichzieht.

2. Sicherheitssystem nach Anspruch 1,
dadurch gekennzeichnet, daß jeder Behälter (9, 29, 39) für Druckgas senkrecht zu seinen Öffnungen für den Einund Austritt der Gase einen eingebauten Anschlußstutzen aufweist, der geeignet ist, den Durchsatz der ausdringenden Gase im Fall eines Bruches einer Rohrleitung zu begrenzen.

3. Sicherheitssystem nach Anspruch 2,
dadurch gekennzeichnet, daß der Anschlußstutzen im Hinblick auf sowohl das Volumen des betroffenen Behälters (9, 29, 39), als auch auf den Nennbetriebsdruck, wenn der Behälter voll ist, und eine vorbestimmte Entleerungsdauer des Behälters derart bemessen ist, daß die in die Atmosphäre durch die entsprechende Öffnung hindurch austretenden Gase sich vollständig verdünnen können.

4. Sicherheitssystem nach einem der Ansprüche 1 bis 3,
dadurch gekennzeichnet, daß die gesamten Behälter (9, 29, 39) mit dem Motor (4) durch eine Vielzahl von Versorgungsleitungen (8) verbunden sind, die voneinander unabhängig sind, wobei jede dieser Leitungen mit gesteuerten Verschlußmitteln versehen ist.

5. Sicherheitssystem nach einem der Ansprüche 1 bis 4,
dadurch gekennzeichnet, daß der Raum (6), in dem der Motor (4) angeordnet ist, abgedichtet und mit mindestens einer im wesentlichen senkrechten Abzugleitung (5, 25, 35) versehen ist, die in den oberen Teil des Fahrzeugs mündet.

6. Sicherheitssystem nach Anspruch 5,
dadurch gekennzeichnet, daß die Versorgungsleitungen (8), die die Behälter (9, 29, 39) mit dem Motor (4) verbinden, ganz oder teilweise im Innern der Abzugleitung (5, 25, 35) angeordnet sind.

7. Sicherheitssystem nach Anspruch 5 oder 6,
dadurch gekennzeichnet, daß ein Abzug (7) oberhalb der Behälter (29) angeordnet ist, wobei der Abzug mit der Abzugleitung (25) verbunden ist.

8. Sicherheitssystem nach Anspruch 5 oder 6,
dadurch gekennzeichnet, daß die Behälter (39) im Innern der Abzugleitung (35) angeordnet sind.

9. Sicherheitssystem nach einem der Ansprüche 5 bis 8,
dadurch gekennzeichnet, daß die die Verbrennung bewirkende Luft des Motors (4) in einer Abzugleitung (5, 25, 35) abgezogen wird.

10. Sicherheitssystem nach einem der Ansprüche 5 bis 8,
dadurch gekennzeichnet, daß die Auspuffleitung des Motors (4) in die Abzugleitung (5, 25, 35) mündet.

11. Sicherheitssystem nach einem der vorrangehenden Ansprüche,
dadurch gekennzeichnet, daß die Vorratsbehälter (9) am Dach des Straßenfahrzeugs und daß Sicherheitsmittel (3) vorderseitig der Behälter angeordnet sind.
